# EUROPEAN PATENT SPECIFICATION

(11) **EP 4 504 558 B1**
(45) Date of publication and mention of the grant of the patent: **29.10.2025**
(21) Application number: 23739704.7
(22) Date of filing: 30.05.2023
(51) Int. Cl.: B60N 2/18, B60N 2/90, B60N 2/02

(54) **CUSHION FRAME MODULE FOR SEAT WITH ULTRA COMFORT POSITION**
KISSENRAHMENMODUL FÜR SITZ MIT ULTRAKOMFORTPOSITION
MODULE DE CADRE DE COUSSIN POUR SIÈGE AVEC POSITION ULTRA-CONFORTABLE

(30) Priority: 27.05.2022 US 202263346337 P
(43) Date of publication of application: 12.02.2025
(73) Proprietor: Magna Seating Inc., Aurora, Ontario L4G 7K1 (CA)
(72) Inventor: KAPUSKY, Michael, South Lyon, MI 48178 (US); ZUO, Jiale, Minhang District, Shangahi, 201108 (CN); ZHAO, Kai, Novi, MI 48374 (US); KURZEJA, Kristof, M., Commerce Township, MI 48382 (US); ZIMMERMAN, Ronald, II, White Lake, MI 48383 (US)
(74) Representative: Witte, Weller und Partner Patentanwälte mbB Stuttgart
(86) International application number: PCT/US2023/023810
(87) International publication number: WO 2023/230374

(56) References cited:
- JP-B2- 3 471 639
- US-A1- 2022 048 422
- US-B1- 6 309 020
- US-B2- 11 548 424

## Description

### FIELD AND BACKGROUND OF THE INVENTION

The present invention relates to a seat assembly for use in an automotive vehicle. More particularly, the invention relates to a cushion frame module for use in an automotive seat assembly and configured to reposition the seat assembly between an upright seating position and an ultra comfort position.

### DESCRIPTION OF RELATED ART

Automotive vehicles typically include one or more seat assemblies having a seat cushion and a seat back for supporting a passenger above a vehicle floor. It is commonly known for certain seat assemblies to include a legrest mechanism that may be selectively deployed to provide Support for the occupant's legs. It is also commonly known for the legrest mechanism to be retracted to a stowed position when not in use. In addition, it is commonly known for certain seat assemblies to be pivotable between an upright seating position and an ultra comfort Position with the seat cushion tipped rearward and the legrest deployed.

It is also commonly known that front row seats and rear row seats vary in core seat structures. Fürther, the core seat structures vary between different manufacturers and vary based on functions included within the seat assemblies. Modifications may be required to the core seat structures in order to integrale the cushion tipping function and the legrest mechanism within the seat assembly when the seat assembly is constructed. Fürther, a variety of components may be required in order to add the cushion tipping function and the legrest mechanism to a ränge of different core seat structures, including for front row seats and rear row seats.

There is an increased occurrence of the occupant waiting in the vehicle while the vehicle is parked, such as while an electric vehicle is being charged, the occupant is resting, and the hke as non-limiting examples.

It is desirable for the vehicle seat to shift or tilt into more relaxed positions, such as the ultra comfort position, to enhance occupant comfort. Fürther, it is desirable to add the cushion tipping function and a legrest mechanism to the seat assembly with minimal modifications to the existing core structure of the seat assembly. In addition, it is desirable to add the cushion tipping function and the legrest mechanism to existing front row seat assemblies and rear row seat assemblies.

US 6,309,020 B1 discloses a lifter apparatus for vehicle seats comprising a lead screw which is to be moved in a direction. A nut is screwed to the lead screw. A first bracket is to be swung by moving the lead screw so as to move a seat up and down. The first bracket has a first opening. The nut is fitted in the first opening. A second bracket is to move the seat up and down with the first bracket. The second bracket has a second opening of a size larger than that of the first opening. The second opening is to pass the nut in an inclined position therethrough. The second opening is to position the nut therein.

US 2022/0048422 A1 discloses a power leg rest for a vehicle comprising a pair of fixed plates, a main pipe connected to between internal surfaces of the fixed plates, a tilt motor tiltably mounted to the main pipe, a pair of main links fastened to external surfaces of the fixed plates by respective first hinge pins, a support pipe connected to between front end portions of the main links, a lead nut bracket coupled to a lead screw and movable forwards and backwards and hingedly fastened to the support pipe, a pair of leg rest links mounted on both sides of a leg rest frame, and a pair of driving links, each being hingedly fastened to corresponding ones of the leg rest links, the main links, and the fixed plates, operating in linkage with the main link, and folding or unfolding the pair of leg rest links.

### SUMMARY OF THE INVENTION

According to **the invention** , there is provided a cushion tipping module **comprising the features of claim 1, a cushion frame module comprising the features of claim 7, and a seat assembly with the features of claim 10.**

### BRIEF DESCRIPTION OF THE DRAWINGS

Advantages of the present invention will be readily appreciated as the same becomes better understood by reference to the following detailed description when considered in connection with the accompanying drawings wherein:
Figure 1 is a perspective view of a seat assembly assembled with a cushion firame module comprising a cushion tipping module and a legrest module and showing the seat assembly in an upright seating position, according to one embodiment of the present invention;
Figure 2 is a perspective view of a portion of the seat assembly of Figure 1 prior to assembly with the cushion frame module;
Figure 3 is an enlarged view of a portion of the seat assembly of Figure 1 with the legrest module omitted;
Figure 4 is a perspective view of the cushion tipping module of Figure 3 removed from the seat assembly;
Figure 5 is a perspective view of the seat assembly of Figure 3, showing the cushion tipping module in an inclined position;
Figure 6 is a front perspective view of the legrest module of Figure 1 comprising a legrest mechanism assembled with a mounting bracket;
Figure 7 is a rear perspective view of the legrest mechanism of Figure 6 assembled with a legrest cover, according to another embodiment of the present invention;
Figure 8 is a side view of the seat assembly of Figure 1, showing the cushion tipping module in a lowered position and the legrest mechanism in a stowed position;
Figure 9 is a side view of the seat assembly of Figure 8, showing the cushion tipping module in the lowered position with the legrest module omitted;
Figure 10 is a side view of the seat assembly of Figure 9, showing the cushion tipping module in the inclined position and the seat cushion in a rearward inclined position;
Figure 11 is a side view of the seat assembly of Figure 8, showing the seat assembly in an ultra comfort position, the cushion tipping module in the inclined position, and the legrest mechanism in a deployed position;
Figure 12 is a perspective view a seat assembly, according to another embodiment of the present invention;
Figure 13 is a perspective view of the seat assembly of Figure 12 assembled with a cushion tipping module, according to another embodiment of the present invention;
Figure 14 is a perspective view of a cushion tipping module in a lowered position, according to another embodiment of the present invention;
Figure 15 is a perspective view of the cushion tipping module of Figure 14 in an inclined position;
Figure 16 is a perspective view of a seat assembly assembled with a cushion tipping module, showing the seat assembly in an upright seating position and the cushion tipping module in a lowered position, according to another embodiment of the present invention;
Figure 17 is a perspective view of the cushion tipping module of Figure 16 in the lowered position;
Figure 18 is a perspective view of the cushion tipping module of Figure 17 in an inclined position; and
Figure 19 is a perspective view of the seat assembly of Figure 16, showing the seat assembly in an ultra comfort position and the cushion tipping module in the inclined position.

### DETAILED DESCRIPTION OF THE INVENTION

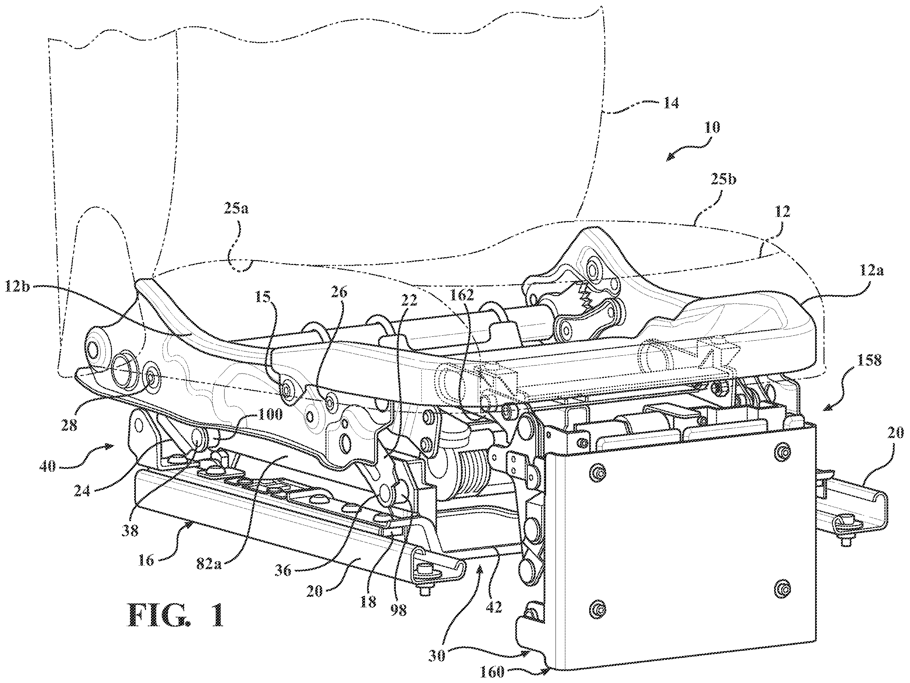

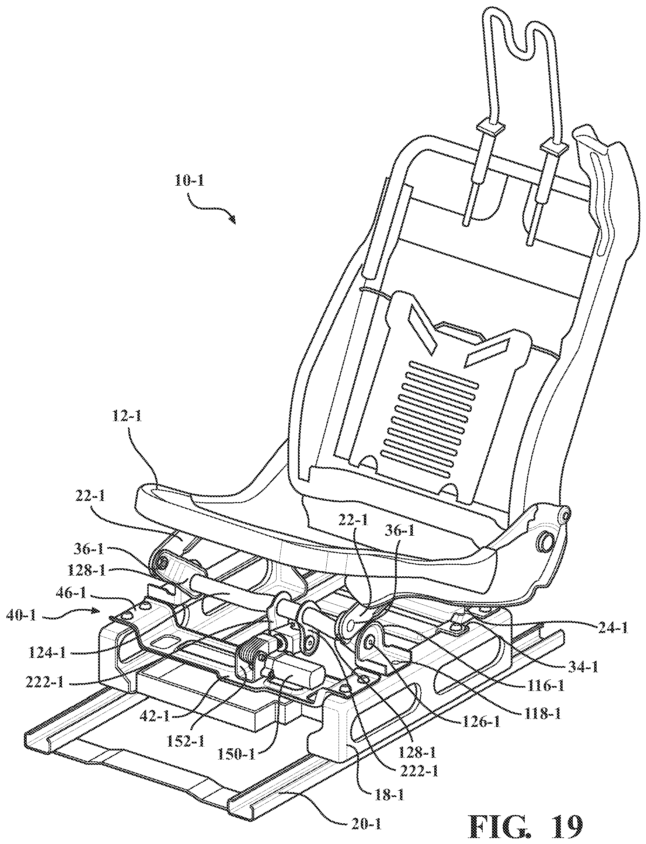

Figures 1-19 illustrate components of a seat assembly 10 for use in an automotive vehicle according to embodiments described herein. Directional references employed or shown in the description, figures, or claims, such as top, bottom, upper, lower, upward, downward, lengthwise, widthwise, left, right, and the like, are relative terms employed for ease of description and are not intended to limit the scope of the invention in any respect. Referring to the Figures, like numerals indicate like or corresponding parts throughout the several views.

Depicted in Figure 1, the seat assembly 10 includes a seat cushion 12 and a seat back 14 pivotally coupled to the seat cushion 12. The seat back 14 may pivot between an upright seating position, a plurality of reclined seating positions, and a fold flat position overlapping the seat cushion 12, as is commonly known in the art. The seat cushion 12 may include a front cushion 12a pivotably coupled to a rear cushion 12b by opposing cushion pivots 15, as is commonly known in the art. The seat assembly 10 also includes a track assembly 16 comprising opposing upper tracks 18 slidably coupled to respective lower tracks 20 and configured to reposition the seat assembly 10 in a forward direction and a rearward direction along the lower tracks 20, as is commonly known in the art. Further, the seat assembly 10 includes opposing front and rear links 22, 24 having upper link ends pivotably coupled to the respective inboard and outboard sides 25a, 25b of the seat cushion 12 by respective front and rear upper pivots 26, 28 and lower link ends configured to be pivotably coupled to the upper tracks 18 of the track assembly 16. It will be appreciated that the upper ends of the front and rear links 22, 24 may be fixedly coupled to the respective inboard and outboard sides 25a, 25b of the seat cushion 12 without altering the scope of the present invention. In addition, the lower link ends of the front and rear links 22, 24 may be configured to be fixedly coupled to the upper tracks 18 without altering the scope of the present invention.

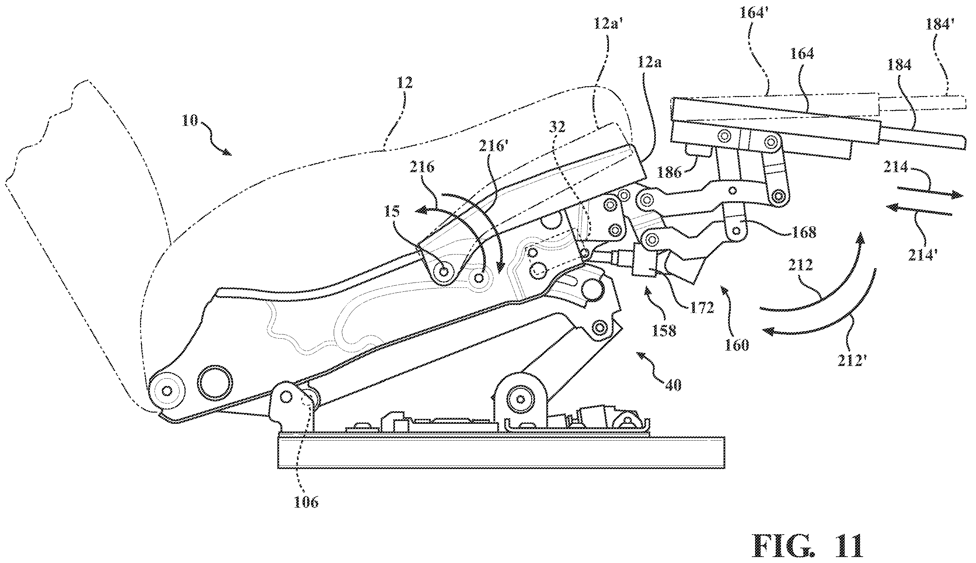

Referring to Figure 1, the seat assembly 10 also includes a cushion frame module 30 assembled to the seat cushion 12 and configured to selectively adjust the seat assembly 10 between the upright seating position and an ultra comfort position (Figure 11) and to provide leg support for the occupant while the seat assembly 10 is in the ultra comfort position. The cushion frame module 30 may be configured to be added to front row seats and/or to rear row seats. The cushion frame module 30 may also be configured to selectively reposition the seat assembly 10 to the ultra comfort position while the vehicle is stationary, such as while the vehicle is parked or while the vehicle is being charged, as non-limiting examples.

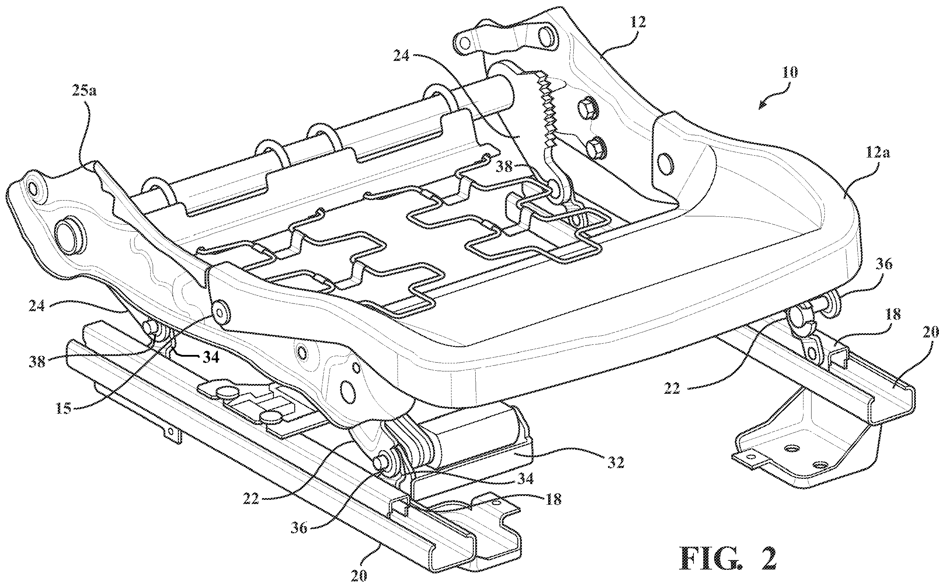

Figure 2 shows the seat assembly 10 lacking the cushion frame module 30 and lacking the capability of tilting the seat cushion 12 in the rearward direction to the ultra comfort position. The seat assembly 10 may include a front row 6-way power (fore/aft, lift, and front tilt functions) core seat structure. The seat assembly 10 may include a front cushion tilt motor 32 positioned near the inboard side 25a of the seat cushion 12 and configured to pivot the front cushion 12a about the cushion pivots 15 between a down position and an up position (shown as 12a and 12a', respectively in Figure 11). When the front cushion 12a is in the down position, actuating the front cushion tilt motor 32 in a forward direction causes the front cushion 12a to be pivoted upward to the up position. The front cushion 12a is pivoted towards the down position when the front cushion tilt motor 32 is actuated in a reverse direction.

It will be appreciated that the seat assembly 10 may have a rear row core seat structure, a front row core seat structure, a lift function, a front tilt function, and/or other seat functions without altering the scope of the present invention. Referring to Figure 2, the seat assembly 10 includes longitudinally spaced apart track brackets 34 fixedly coupled to each of the upper tracks 18. In addition, the seat assembly 10 includes opposing front and rear lower pivots 36, 38 pivotably coupling or fixedly coupling the lower ends of the respective front and rear links 22, 24 to the track brackets 34.

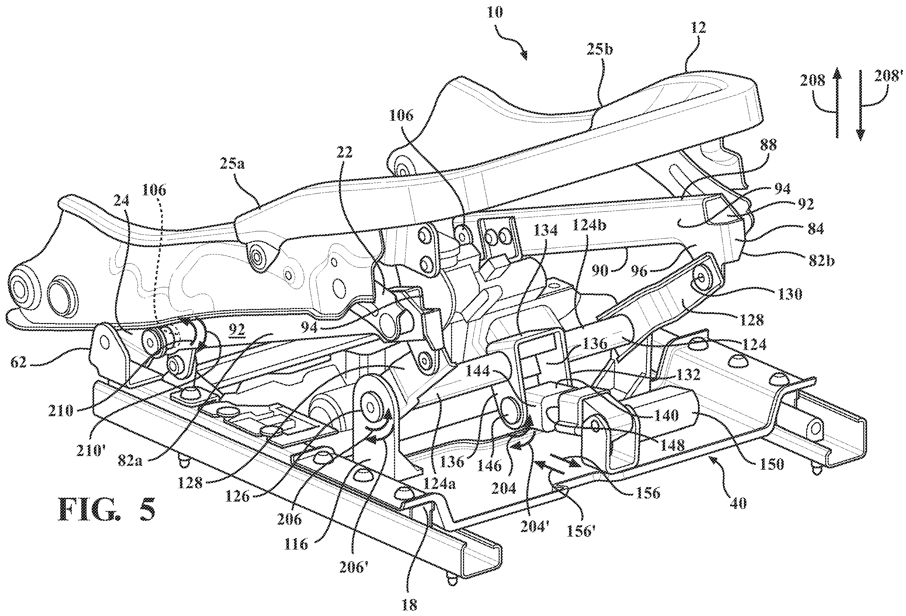

Referring to Figures 1 and 3-5, the cushion frame module 30 includes a cushion tipping module 40 configured to pivot the seat cushion 12 between the upright seating position (Figure 1) and a rearward inclined position (Figure 5). The cushion tipping module 40 is shown in a lowered position in Figure 1 and an inclined position in Figure 5. The cushion tipping module 40 is an independent mechanism that can be mounted between the top of the track assembly 16 and below the cushion lower pivot points, such as the front and rear lower pivots 36, 38, with minimal changes to the existing structure of seat assembly 10.

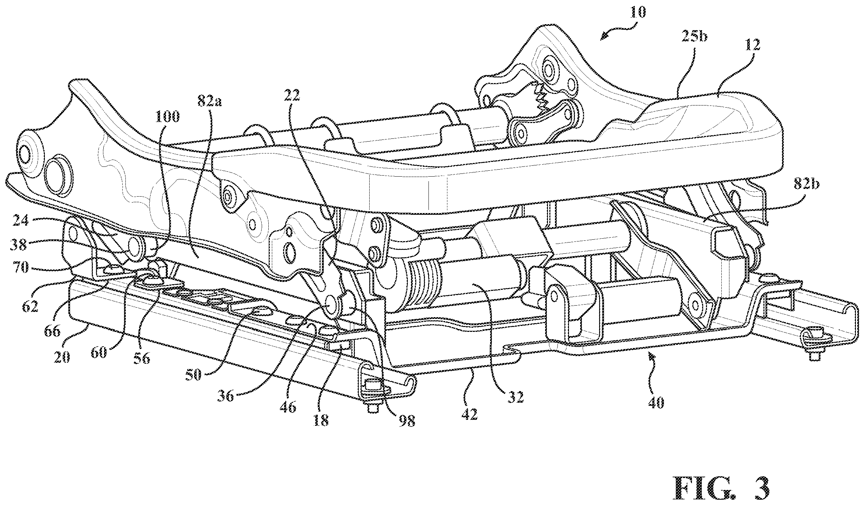

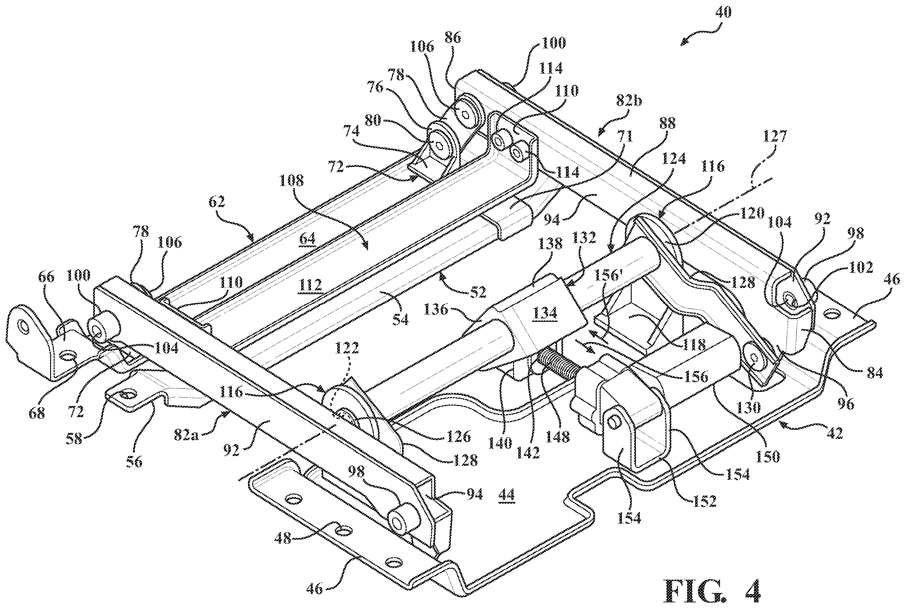

Depicted in Figure 4, the cushion tipping module 40 includes a motor support bracket 42 having a center section 44 extending between opposing end flanges 46 configured to be fixedly coupled to the respective upper tracks 18. The end flanges 46 extend laterally away from the center section 44 and may be vertically offset above the center section 44. In addition, the end flanges 46 may include a plurality of mounting holes 48 configured to align with holes (not shown) in the respective upper tracks 18. Referring to Figure 3, the end flanges 46 are fixedly coupled to the respective upper tracks 18 by mechanical fasteners 50 extending through the mounting holes 48 in the end flanges 46 and through the holes (not shown) in the respective upper tracks 18. It will be appreciated that screws, pins, rivets, welded connections, and the like may be used as the mechanical fasteners 50 without altering the scope of the present invention.

Shown in Figure 4, the cushion tipping module 40 also includes an auxiliary bracket 52 configured to be fixedly coupled to the upper tracks 18 rearward of the motor support bracket 42. The auxiliary bracket 52 includes a center portion 54 vertically offset from and extending between opposing end tabs 56. The end tabs 56 may include one or more mounting holes 58 configured to align with holes (not shown) in the upper tracks 18. Referring to Figure 3, the end tabs 56 are fixedly coupled to the respective upper tracks 18 by mechanical fasteners 60 extending through the mounting holes 58 and through the holes in the respective upper tracks 18. It will be appreciated that screws, pins, rivets, welded connections, and the like may be used as the mechanical fasteners 60 without altering the scope of the present invention.

Referring to Figures 3 and 4, the cushion tipping module 40 includes a rear bracket 62 configured to be fixedly coupled to the upper tracks 18 rearward of the auxiliary bracket 52. The rear bracket 62 includes a center span 64 vertically offset from and extending between opposing bent tabs 66. The bent tabs 66 may include mounting holes 68 configured to align with holes (not shown) in the upper tracks 18. Referring to Figure 3, the bent tabs 66 may be fixedly coupled to the respective upper tracks 18 by mechanical fasteners 70 extending through the mounting holes 68 and through the holes (not shown) in the respective upper tracks 18. It will be appreciated that screws, pins, rivets, welded connections, and the like may be used as the mechanical fasteners 70 without altering the scope of the present invention.

Depicted in Figure 4, the cushion tipping module 40 includes spaced apart clips 71 fixedly coupling the rear bracket 62 to the auxiliary bracket 52. In addition, the cushion tipping module 40 also includes laterally spaced apart rear mounts 72 having a base portion 74 fixedly coupled to an upper side of the rear bracket 62. The rear mounts 72 are generally L-shaped and include an upright portion 76 extending at generally a right angle from the base portion 74. In addition, the cushion tipping module 40 includes opposing rearward links 78 having a bottom portion pivotably coupled to the upright portion 76 of the respective rear mounts 72 by base pivots 80.

Referring to Figures 4 and 5, the cushion tipping module 40 also includes inboard and outboard side supports 82a, 82b configured to be pivotably coupled to the front and rear links 22, 24 on the respective inboard and outboard sides 25a, 25b of the seat assembly 10. The side supports 82a, 82b are generally tubular-shaped with a generally rectangular cross-section extending between a forward end 84 and a rearward end 86. The side supports 82a, 82b also include upper and lower walls 88, 90 extending laterally between distal and proximal walls 92, 94. In addition, the side supports 82a, 82b include a front flange 96 extending generally downward from the proximal walls 94. It will be appreciated that the general shape of the inboard and outboard side supports 82a, 82b may vary without altering the scope of the present invention.

Depicted in Figure 4, the side supports 82a, 82b also include spaced apart front and rear bosses 98, 100 fixedly coupled to a respective hole 102 in the distal walls 92. The front and rear bosses 98, 100 project laterally outward from the distal walls 92 and include a passageway 104 extending laterally therethrough. Referring to Figure 1, the front and rear bosses 98, 100 are spaced apart on the side supports 82a, 82b and are configured to be pivotably coupled to the front and rear links 22, 24 by the front and rear lower pivots 36, 38 on the respective inboard and outboard sides 25a, 25b of the seat assembly 10. Shown in Figure 4, the cushion tipping module 40 also includes opposing rearward pivots 106 pivotably coupling an upper portion of the rearward links 78 to the proximal wall 94 of the adjacent inboard and outboard side supports 82a, 82b near the rearward end 86.

Depicted in Figure 4, the cushion tipping module 40 also includes a rear brace 108 fixedly coupled to the inboard and outboard side supports 82a, 82b. In more detail, the rear brace 108 is a generally U-shaped bracket with opposing side flanges 110 projecting at generally a right angle from the distal ends of a laterally extending middle section 112. The side flanges 110 are fixedly coupled to the adjacent side supports 82a, 82b by a pair of spaced apart mechanical fasteners 114. It will be appreciated that screws, pins, rivets, welded connections, and the like may be used as the mechanical fasteners 114 without altering the scope of the present invention.

Also depicted in Figure 4, the cushion tipping module 40 includes laterally spaced apart front mounts 116 having a base portion 118 fixedly coupled to the center section 44 of the motor support bracket 42. The front mounts 116 are generally L-shaped and include an upright portion 120 extending at generally a right angle from the base portion 118 and include a passageway 122 extending laterally through the upright portion 120. In addition, the cushion tipping module 40 includes a transverse tube 124 having tube ends pivotably coupled to the passageways 122 in the respective front mounts 116 by tube pivots 126. The transverse tube 124 is rotatable about a longitudinal axis 127 of the transverse tube 124. The cushion tipping module 40 also includes laterally spaced apart lift links 128 having a proximal end fixedly coupled to the transverse tube 124 adjacent the front mounts 116. The lift links 128 include a distal end laterally offset from the respective proximal end with the distal end pivotably coupled to the front flange 96 on the adjacent side support 82a, 82b by lift pivots 130.

Referring to Figures 4 and 5, the cushion tipping module 40 also includes a mounting block 132 fixedly coupled to the transverse tube 124. The mounting block 132 is generally U-shaped with a lateral wall 134 extending between proximal ends of spaced apart side legs 136. In addition, the mounting block 132 may include a rear brace 138 extending laterally between the side legs 136. Further, the transverse tube 124 may comprise inboard and outboard tubes 124a, 124b having proximal ends fixedly coupled to the respective side legs 136, as shown in Figure 5. It will be appreciated that the transverse tube 124 may extend laterally through the mounting block 132 without altering the scope of the present invention. Depicted in Figures 4 and 5, the cushion tipping module 40 includes a threaded nut 140 having a threaded passageway 142 extending longitudinally therethrough. The threaded nut 140 includes laterally spaced apart side walls 144 pivotably coupled to the adjacent side legs 136 of the mounting block 132 by nut pivots 146. The side legs 136 form actuator links operatively coupled between the threaded nut 140 and the transverse tube 124.

Shown in Figure 4, the cushion tipping module 40 also includes a lead screw 148 meshingly engaged with the threaded passageway 142 in the threaded nut 140. In addition, the cushion tipping module 40 also includes an electric motor 150 supported above the motor support bracket 42 by a motor mounting bracket 152. The motor mounting bracket 152 is a generally U-shaped bracket having opposing side walls 154 pivotably or fixedly coupled to the electric motor 150. In Figure 4, the electric motor 150 is mounted to the motor mounting bracket 152 with the distal end of the electric motor 150 oriented towards the outboard side 25b of the seat assembly 10 (i.e., an outboard orientation). It will be appreciated that the orientation of the electric motor 150 may be reversed (i.e., an inboard orientation) to provide clearance for other components without altering the scope of the present invention. The electric motor 150 is operatively coupled to the lead screw 148 and configured to rotate the lead screw 148 in a first rotational direction when the electric motor 150 is actuated in a forward direction. In addition, the electric motor 150 rotates the lead screw 148 in a second rotational direction different than the first rotational direction when the electric motor 150 is actuated in a reverse direction. The rotation of the lead screw 148 in the first rotational direction and in the second rotational direction causes the threaded nut 140 to be transposed along the lead screw 148 in a forward direction (arrow 156) and a rearward direction (arrow 156'), respectively.

Referring to Figures 2-5, to assemble the cushion tipping module 40 with the seat assembly 10, the front and rear links 22, 24 are disconnected from the front and rear lower pivots 36, 38, respectively. Next, holes are added to the upper tracks 18 configured to align with the mounting holes 48, 58, 68 in the motor support bracket 42, the auxiliary bracket 52, and the rear bracket 62, respectively. It will be appreciated that the upper tracks 18 may be replaced with an alternate upper track 18 that includes holes configured to align with the mounting holes 48, 58, 68 without altering the scope of the present invention. Referring to Figures 3 and 4, the cushion tipping module 40 is placed on the upper tracks 18 with the mounting holes 48, 58, 68 aligned with the respective holes in the upper tracks 18. Next, mechanical fasteners 50, 60, 70 are inserted through the mounting holes 48, 58, 68 and into the respective holes in the upper tracks 18 to fixedly couple the motor support bracket 42, the auxiliary bracket 52, and the rear bracket 62 to the upper tracks 18. The front and rear links 22, 24 are assembled with the respective front and rear bosses 98, 100 on the adjacent side support 82a, 82b. The front and rear lower pivots 36, 38 are inserted through the lower holes (not shown) in the respective front and rear links 22, 24 and into the holes 104 in the front and rear bosses 98, 100, respectively, to pivotably couple the lower ends of the front and rear links 22, 24 to the adjacent side supports 82a, 82b.

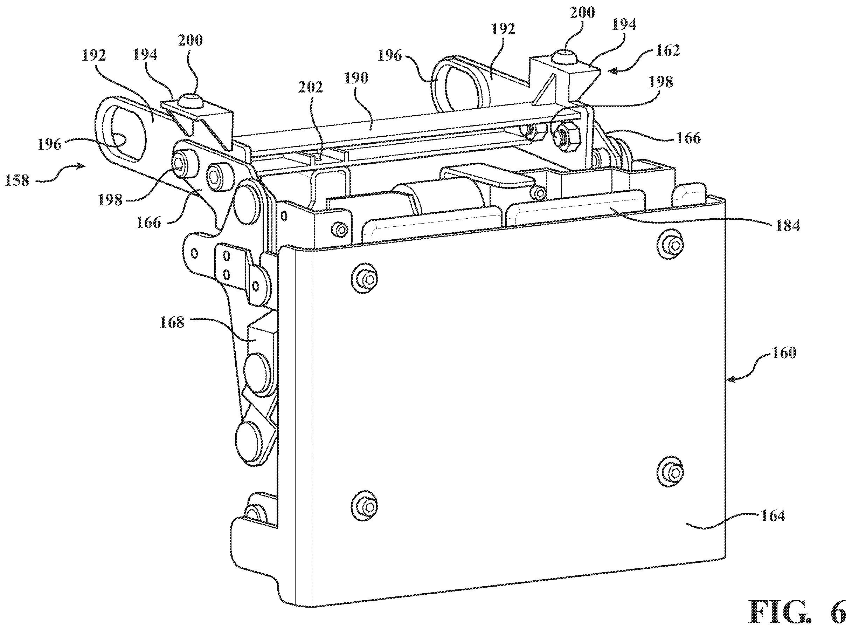

Referring to Figures 1 and 6, the cushion frame module 30 also includes a legrest module 158 configured to provide support for the legs of the occupant while the seat assembly 10 is in the ultra comfort position. The legrest module 158 includes a legrest mechanism 160 fixedly coupled to a mounting bracket 162 configured to be fixedly coupled to a front portion of the seat cushion 12. Further, the legrest mechanism 160 is configured to be repositioned between a stowed position (Figure 1) and a deployed position (Figure 11).

Depicted in Figures 6-8, the legrest mechanism 160 includes a main platform 164, opposing side brackets 166, and opposing linkage mechanisms 168. The opposing linkage mechanisms 168 include an outer end fixedly or pivotably coupled to the main platform 164 and an inner end pivotably coupled or fixedly coupled to the respective side brackets 166. The linkage mechanisms 168 are configured to lift/lower and extend/retract the main platform 164 between the stowed position and the deployed position. The side brackets 166 include spaced apart holes 170 extending laterally therethrough. The legrest mechanism 160 also includes a primary motor 172, a cross member 174, a legrest lead screw 176, a legrest threaded nut 178, and a center bracket 180. The primary motor 172 is fixedly or pivotably coupled to the cross member 174 extending between and fixedly coupled to the opposing linkage mechanisms 168. The primary motor 172 is operatively coupled to the lead screw 176 and configured to selectively rotate the lead screw 176 in a forward rotational direction and a reverse rotational direction when the primary motor 172 is actuated in a forward direction and a reverse direction, respectively. The threaded nut 178 is meshingly engaged with the lead screw 176 and fixedly coupled or pivotably coupled to the center bracket 180. The center bracket 180 includes spaced apart holes 182. In operation, the linkage mechanisms 168 are lifted and extended by the primary motor 172 rotating the lead screw 176 in the forward rotational direction which causes the threaded nut 178 to be transposed rearward along the lead screw 176. In addition, the linkage mechanisms 168 are lowered and retracted by the primary motor 172 rotating the lead screw 176 in the reverse rotational direction which causes the threaded nut 178 to be transposed forward along the lead screw 176.

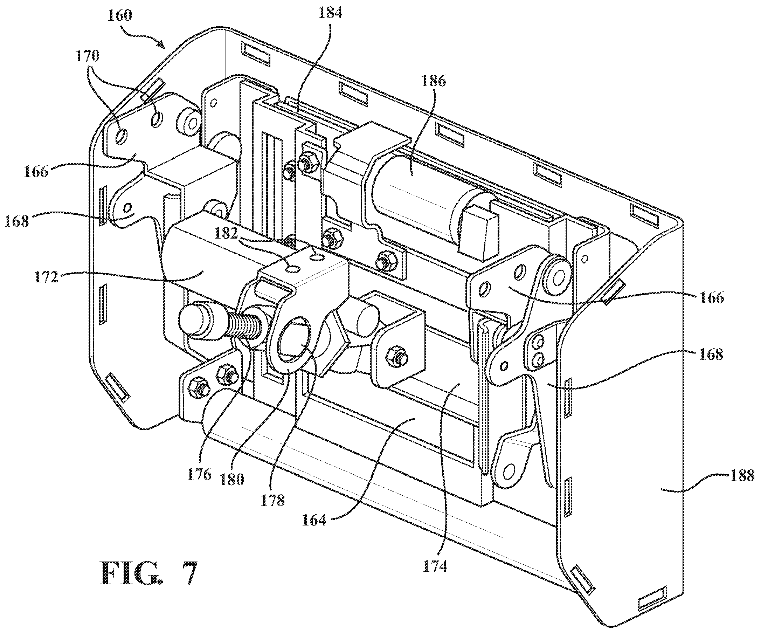

The legrest mechanism 160 may also include a secondary platform 184 slidably coupled to the main platform 164 and operatively coupled to a secondary motor 186 configured to selectively extend and retract the secondary platform 184. Depicted in Figure 7, the legrest mechanism 160 may also include a cover 188 configured to provide protection and a trim surface for the legrest mechanism 160. The cover 188 is omitted in Figures 1, 6, 8, and 11 for clarity. It will be appreciated that the legrest mechanism 160 may vary in size, shape, and included functions without altering the scope of the present invention.

Shown in Figure 6, the mounting bracket 162 includes a main brace 190 extending between and fixedly coupled to opposing attachment brackets 192. In addition, the mounting bracket 162 includes opposing mounting flanges 194 extending laterally outward from the respective attachment brackets 192. The attachment brackets 192 may include apertures 196 configured to mount to existing components (not shown) of the seat assembly 10. In addition, the attachment brackets 192 include spaced apart holes (not shown) extending laterally therethrough and configured to align with holes 170 in the side brackets 166 of the legrest mechanism 160. During assembly, the side brackets 166 are fixedly coupled to the respective attachment brackets 192 by inserting mechanical fasteners 198 through the holes in the attachment brackets 192 and through the holes 170 in the side brackets 166. It will be appreciated that screws, pins, rivets, welded connections, and the like may be used as the mechanical fasteners 198 without altering the scope of the present invention.

In addition, the mounting flanges 194 may be fixedly coupled to a lower surface of the seat cushion 12 or to the front cushion 12a using one or more mechanical fasteners 200 inserted through holes (not shown) in the mounting flanges 194. Further, the main brace 190 includes mounting holes 202 configured to align with holes 182 in the center bracket 180 of the legrest mechanism 160. During assembly, the center bracket 180 is fixedly coupled to the main brace 190 by inserting mechanical fasteners (not shown) through the mounting holes 202 in the main brace 190 and through the holes 182 in the center bracket 180. It will be appreciated that the mounting flange 194 may vary in size, shape, and specific features in order to mount specific legrest mechanisms 160 to specific seat assemblies 10. It will be appreciated that screws, pins, rivets, welded connections, and the like may be used as the mechanical fasteners 200 without altering the scope of the present invention.

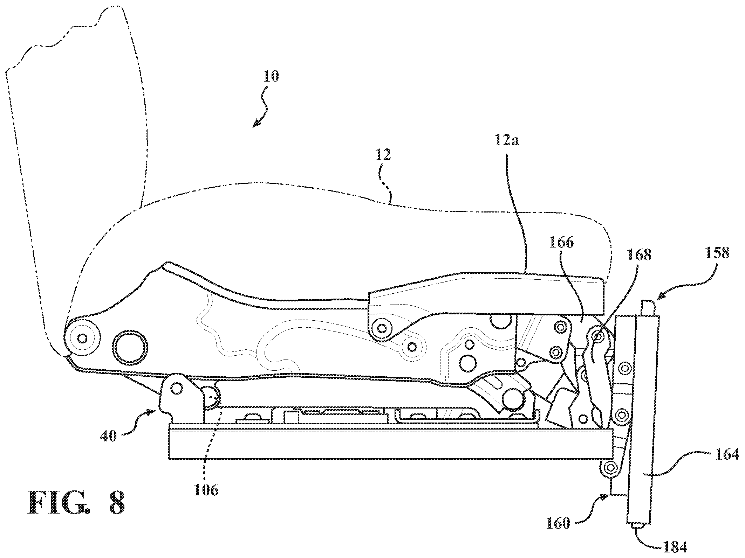

The seat assembly 10 can be repositioned upon demand by the occupant between an upright seating position (Figure 8) and the ultra comfort position (Figure 11) by the cushion tipping module 40 pivoting the seat cushion 12 to the rearward inclined position relative to the rearward pivots 106 and the legrest mechanism 160 lifting the main platform 164 and extending the secondary platform 184. In an exemplary embodiment of the present invention, the legrest mechanism 160 moves with the cushion tilt to provide about 65° of travel and about 80 mm leg extension. It will be appreciated that the travel and leg extension may be increased and/or reduced as needed for specific seat assemblies 10.

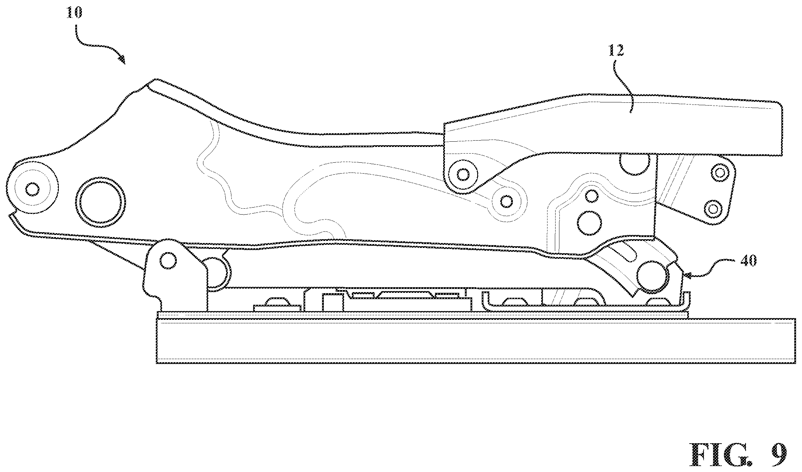

Referring to Figures 8 and 9, the seat assembly 10 is initially in the upright seating position with the front cushion 12a in the down position, the cushion tipping module 40 in the lowered position, and the legrest mechanism 160 in the stowed position with the secondary platform 184 in the retracted position. The legrest module 158 is omitted from Figures 5, 9, and 10 for clarity.

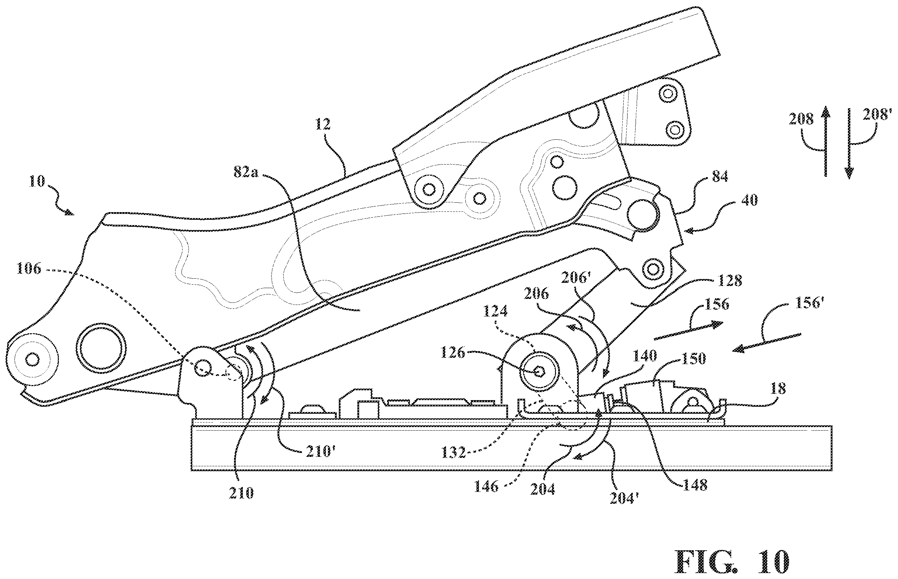

Referring to Figures 4, 5, and 10, to move the seat assembly 10 from the upright seating position to the ultra comfort position, the occupant initiates movement of the electric motor 150 in a forward direction causing the lead screw 148 to rotate in a first rotational direction and causing the threaded nut 140 to travel in the forward direction (arrow 156) along the lead screw 148. As the threaded nut 140 is repositioned forward along the lead screw 148 (arrow 156), the mounting block 132 is rotated rearward (arrow 204, i.e., counterclockwise as viewed in Figures 5 and 10) about the nut pivot 146 causing the transverse tube 124, 124a, 124b and the connected lift links 128 to rotate rearward (arrow 206, i.e., counterclockwise as viewed in Figures 5 and 10) about the tube pivots 126. As the lift links 128 rotate rearward (arrow 206), the forward ends 84 of the side supports 82a, 82b are lifted upward (arrow 208) causing the side supports 82a, 82b to rotate rearward (arrow 210, i.e., counterclockwise as viewed in Figures 5 and 10) about the rearward pivots 106 and tilt the seat cushion 12 to the rearward inclined position.

Referring to Figures 7 and 11, after the seat cushion 12 is tilted to the rearward inclined position by the cushion tipping module 40, the occupant initiates movement of the primary motor 172 in a forward direction within the legrest mechanism 160, causing the linkage mechanisms 168 to extend and lift the main platform 164 (arrow 212). After the linkage mechanisms 168 are extended, the occupant initiates movement of the secondary motor 186 in the forward direction which extends the secondary platform 184 (arrow 214). The legrest mechanism 160 is in a deployed position when the linkage mechanisms 168 and the secondary platform 184 are fully extended.

When the legrest module 158 is fixedly coupled to the front cushion 12a, the seat assembly 10 includes the front cushion tilt motor 32. With the legrest module 158 in the deployed position and the front cushion 12a in the down position, actuating the front cushion tilt motor 32 in the forward direction causes the front cushion 12a to tip upward (arrow 216) about the cushion pivots 15 to the up position (shown as 12a') and causes the main platform 164 and the secondary platform 184 to tilt up to a full-up position (shown as 164' and 184') in response to the front cushion 12a motion. In addition, when the front cushion 12a is in the up position, actuating the front cushion tilt motor 32 in the reverse direction causes the front cushion 12a to pivot downward (arrow 216') about the cushion pivots 15 to the down position (shown as 12a) and causes the main platform 164 and the secondary platform 184 to tip down to a full-down position (shown as 184 and 164) with the front cushion 12a motion. Thus, the front cushion tilt motor 32 allows additional adjustment for the legrest mechanism 160 in addition to the lift and extension functions. The occupant may selectively adjust the tilt of the front cushion 12a and the legrest mechanism 160 between the full-up position (shown as 12a', 164', and 184') and the full-down position (shown as 12a, 164, and 184).

Referring to Figure 11, to return the seat assembly 10 to the upright seating position from the ultra comfort position, the occupant initiates movement of the front cushion tilt motor 32 in a reverse direction to return the front cushion 12a and the legrest mechanism 160 to the full-down position (arrow 216'). Next, the occupant initiates movement of the secondary motor 186 in the reverse direction which retracts the secondary platform 184 (arrow 214') to the retracted position. After the secondary platform 184 is retracted, the occupant initiates movement of the primary motor 172 in the reverse direction causing the linkage mechanism 168 to lower and retract the main platform 164 (arrow 212') to the stowed position. Referring to Figures 5 and 10, the occupant initiates movement of the cushion tipping module 40 after the legrest mechanism 160 is in the stowed position to return the seat assembly 10 to the upright seating position. In more detail, the occupant initiates movement of the electric motor 150 in the reverse direction causing the lead screw 148 to rotate in the rearward rotational direction. The rotation of the lead screw 148 in the rearward rotational direction causes the threaded nut 140 to travel in the rearward direction (arrow 156') along the lead screw 148. As the threaded nut 140 is repositioned rearward along the lead screw 148 (arrow 156'), the mounting block 132 is rotated forward (arrow 204', i.e., clockwise as viewed in Figures 5 and 10) about the nut pivot 146 causing the transverse tube 124, 124a, 124b and the connected lift links 128 to rotate forward (arrow 206', i.e., clockwise as viewed in Figures 5 and 10) about the tube pivot 126. As the lift links 128 are rotated forward (arrow 206'), the forward end 84 of the side supports 82a, 82b are lowered downward (arrow 208') causing the side supports 82a, 82b to rotate forward (arrow 210', i.e., clockwise as viewed in Figures 5 and 10) about the rearward pivots 106 until the cushion tipping module 40 is in the lowered position. It will be appreciated that the sequence of movements of the cushion tipping module 40 and the legrest mechanism 160 may vary without altering the scope of the present invention. For example, the occupant may initiate deployment of the legrest mechanism 160, and then the cushion tipping module 40 and the linkage mechanisms 168 may simultaneously be actuated, as a non-limiting example. It will also be appreciated that the sequence of movements of the cushion tipping module 40 and the legrest mechanism 160 may be controlled by an electronic control module ECU (not shown) without altering the scope of the present invention.

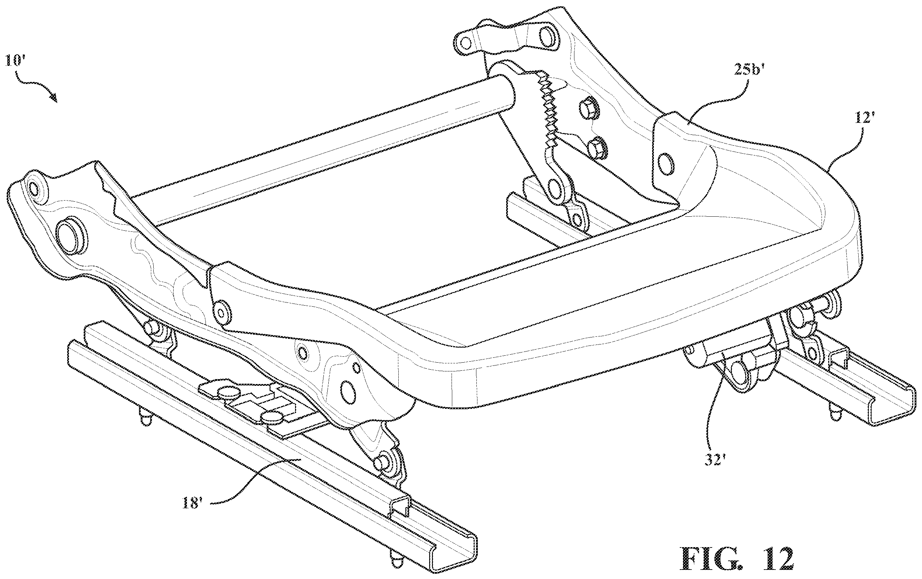

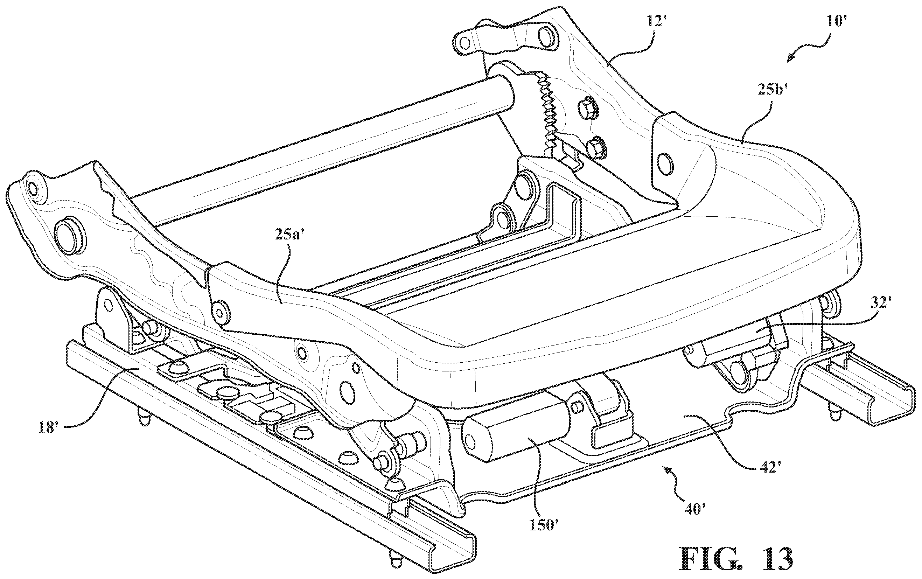

A second embodiment of the seat assembly 10' and the cushion tipping module 40' is shown in Figures 12 and 13, where like primed reference numerals represent similar elements as those described above. The seat assembly 10' shown in Figure 12 includes a front cushion tilt motor 32' positioned near the outboard side 25b' of the seat cushion 12' in place of front cushion tilt motor 32 shown in Figure 3. Only significant differences between the two embodiments are reflected in the Figures and the description below. Referring to Figure 13, the cushion tipping module 40' includes an alternate motor support bracket 42' configured to provide clearance to components within the seat assembly 10' and to be assembled with the upper tracks 18'. In addition, the distal end of the electric motor 150' is oriented towards the inboard side 25a' of the seat assembly 10' (i.e., the inboard orientation) in Figure 13 in comparison to the outboard orientation of the electric motor 150 in Figure 3 to provide clearance for the front cushion tilt motor 32'.

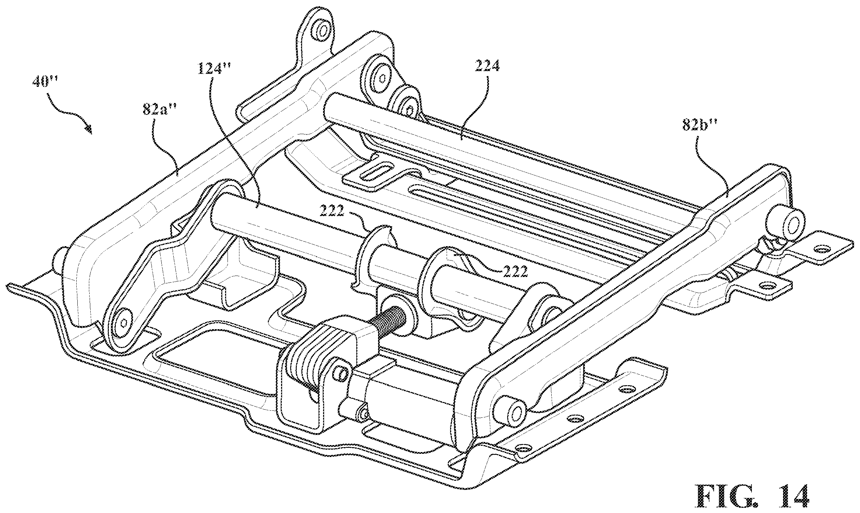

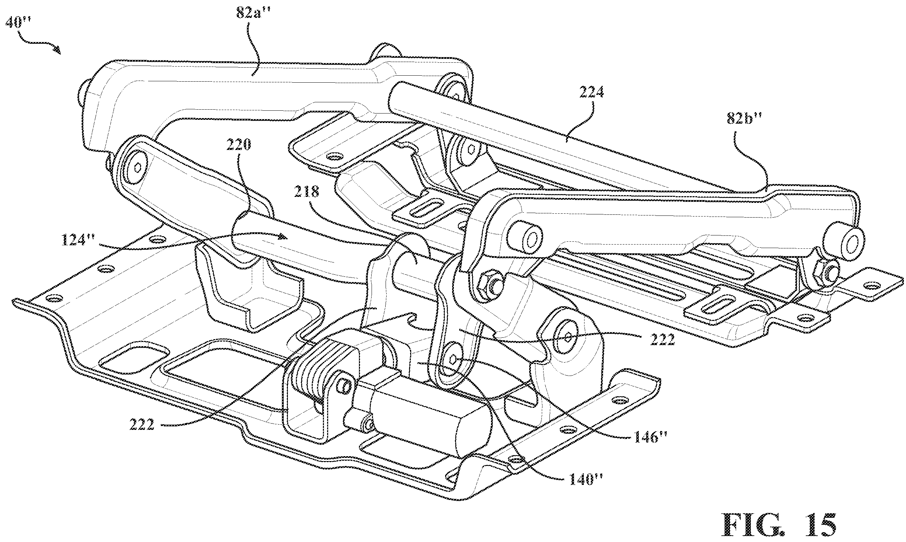

A third embodiment of the cushion tipping module 40" is shown in Figures 14 and 15, where like double primed reference numbers represent similar elements as those described above. Only significant differences between the third embodiment and the embodiments shown above are reflected in the Figures and the description below. Referring to Figures 14 and 15, the cushion tipping module 40" includes a transverse tube 124" having a center section 218 radially offset from the distal tube ends 220 in place of the generally straight transverse tube 124 shown in Figure 4. In addition, the cushion tipping module 40" includes first and second attachment links 222 in place of the mounting block 132 of Figure 4. The first and second attachment links 222 in Figures 14 and 15 have distal ends pivotably coupled to the threaded nut 140" by the nut pivots 146" and proximal ends fixedly coupled to the center section 218 of the transverse tube 124". It will be appreciated that the cushion tipping module 40" may include a single attachment link 222 in place of the first and second attachment links 222 without altering the scope of the present invention. In addition, the cushion tipping module 40" includes a support tube 224 fixedly coupled to the opposing side supports 82a", 82b" in place of the rear brace 108 shown in Figure 4.

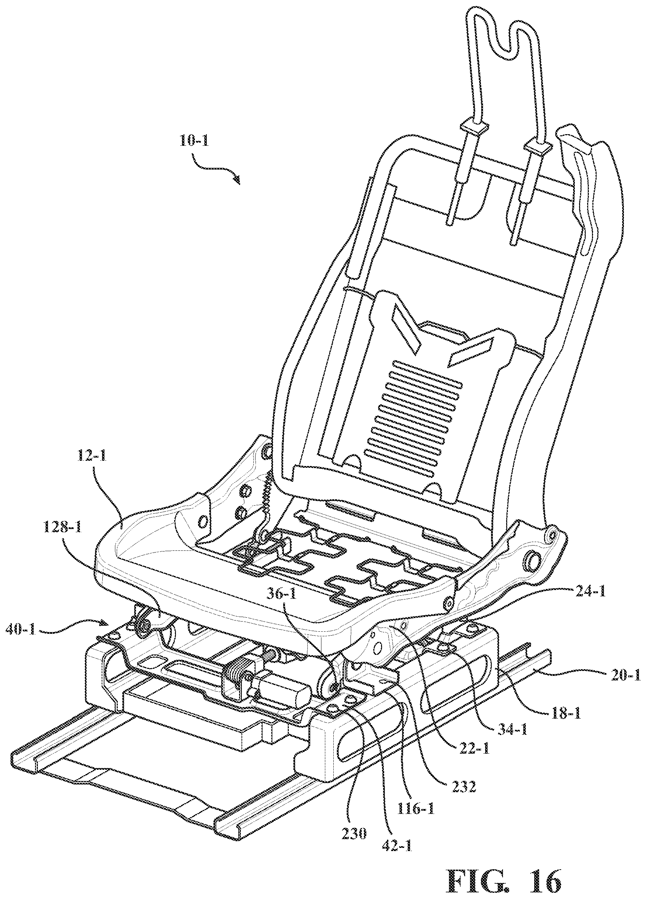

A fourth embodiment of the seat assembly 10-1 and the cushion tipping module 40-1 is shown in Figures 16-19, where like reference numbers with a suffix of "-1" represent similar elements as those described above. Only significant differences between the fourth embodiment and the embodiments shown above are reflected in the Figures and the description below. Referring to Figure 16, the seat assembly 10-1 includes a seat cushion 12-1, opposing front and rear links 22-1, 24-1 having an upper end fixedly or pivotably coupled to the seat cushion 12-1, and opposing upper tracks 18-1 slidably coupled to respective lower tracks 20-1. The rear links 24-1 have lower ends pivotably coupled to respective track brackets 34-1 which are fixedly coupled to the upper tracks 18-1. The seat assembly 10-1 also includes the cushion tipping module 40-1 operatively coupled between the front links 22-1 and the upper tracks 18-1. In contrast to the previous embodiments, the cushion tipping module 40-1 is solely operatively coupled between the front links 22-1 and the upper tracks 18-1 and lacks added components operatively coupling the rear links 24-1 to the upper tracks 18-1.

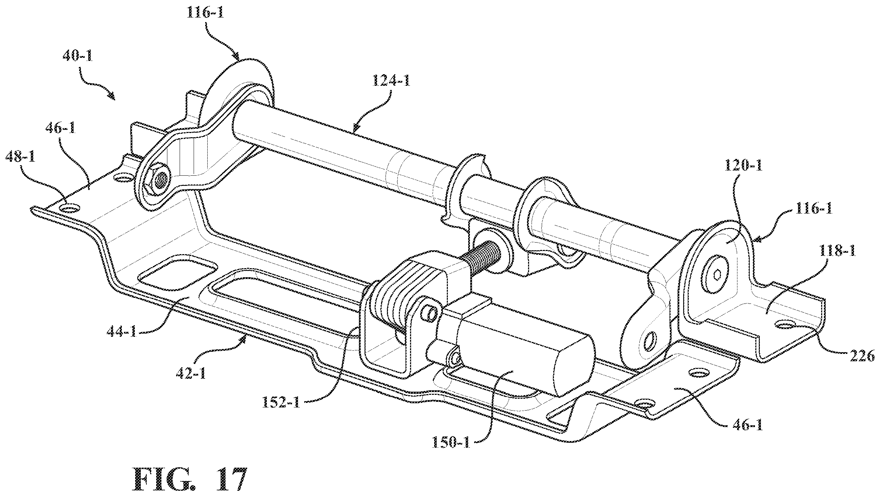

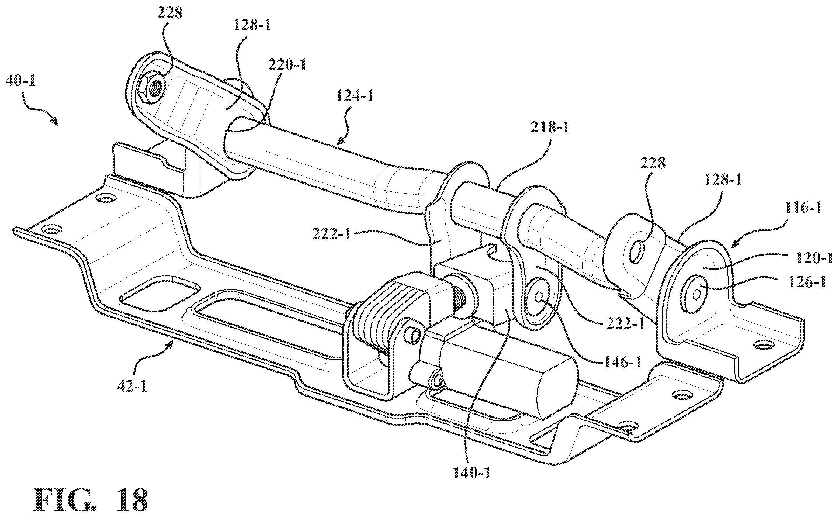

Depicted in Figures 17 and 18, the cushion tipping module 40-1 includes a motor support bracket 42-1 having a center section 44-1 extending between opposing end flanges 46-1 and mounting holes 48-1 extending vertically through the end flanges 46-1. The cushion tipping module 40-1 also includes an electric motor 150-1 supported above the motor support bracket 42-1 by a motor mounting bracket 152-1 fixedly coupled to the center section 44-1 of the motor support bracket 42-1. The cushion tipping module 40-1 also includes front mounts 116-1 having a base portion 118-1 configured to be fixedly coupled to the associated upper track 18-1 and an upright portion 120-1 extending at generally a right angle from the base portion 118-1. The base portion 118-1 further includes one or more mounting holes 226 configured to align with holes (not shown) in the upper tracks 18-1.

Referring to Figure 17-19, the cushion tipping module 40-1 also includes a transverse tube 124-1 having opposing tube ends 220-1 pivotably coupled to the upright portions 120-1 of the front mounts 116-1 by tube pivots 126-1. In addition, the transverse tube 124-1 includes a center section 218-1 radially offset from the tube ends 220-1. The cushion tipping module 40-1 also includes opposing attachment links 222-1 having distal ends pivotably coupled to the threaded nut 140-1 by the nut pivots 146-1 and proximal ends fixedly coupled to the center section 218-1 of the transverse tube 124-1. The cushion tipping module 40-1 also includes laterally spaced apart lift links 128-1 having proximal ends fixedly coupled to the transverse tube 124-1. In addition, the lift links 128-1 include a passageway 228 near the distal ends configured to be pivotably coupled to the respective front links 22-1 of the seat assembly 10-1.

Depicted in Figure 16 and 17, to assemble the cushion tipping module 40-1 with the seat assembly 10-1, the motor support bracket 42-1 and the front mounts 116-1 are fixedly coupled to the upper tracks 18-1 by inserting mechanical fasteners 230, 232 through the mounting holes 48-1, 226 in the motor support bracket 42-1 and the front mounts 116-1, respectively, and into holes (not shown) in the upper tracks 18-1. Next, the front lower pivots 36-1 are inserted through passageways (not shown) in the front links 22-1 and through the passageways 228 in the respective lift links 128-1, pivotably coupling the front links 22-1 with the respective lift links 128-1.

The cushion tipping module 40, 40', 40", 40-1 is scalable and modular and may be customized to fit a variety of seat assemblies with minimal changes to the core seat structures. The size, shape, and position of components in the cushion tipping module 40, 40'. 40", 40-1 may be adjusted to accommodate different core seat structures, including the motor support bracket 42, 42', 42-1, the auxiliary bracket 52, the rear bracket 62, the rear brace 108, , the mounting block 132, the attachment links 222, 222-1, the transverse tube 124, 124", 124-1, the rearward links 78, and the lift links 128, 128-1, as non-limiting examples, without altering the scope of the present invention.

As discussed above, the seat assembly 10, 10', 10-1 of the present invention includes a cushion frame module 30 comprising a cushion tipping module 40, 40', 40", 40-1 and a legrest module 158 configured to reposition the seat assembly 10, 10', 10-1 into an ultra comfort position with the seat cushion 12 tilted rearward and a legrest mechanism 160 deployed. In addition, the cushion tipping module 40, 40', 40", 40-1 and the legrest module 158 may be assembled with a variety of seat assemblies having different core seat structures with minimal modifications to the core seat structures. Further, the cushion tipping module 40, 40', 40", 40-1 may be adjusted to provide clearance with components within the core seat structure, such as adjusting the lateral position of the electric motor 150, 150', 150-1, as a non-limiting example. Also, the legrest module 158 includes a mounting bracket 162 that may be adjusted to mount to a variety of seat assemblies with minimal changes to the core seat structures. Finally, the cushion frame module 30 may be added to existing seat assemblies after the seat assemblies are initially assembled with minimal changes to the existing core seat structure.

The invention has been described in an illustrative manner, and it is to be understood that the terminology, which has been used, is intended to be in the nature of words of description rather than of limitation. Many modifications and variations of the present invention are possible in light of the above teachings. It is, therefore, to be understood that within the scope of the appended claims, the invention may be practiced other than as specifically described.

## Claims

1. A cushion tipping module (40) configured to be assembled with a seat assembly (10) for use in a vehicle, the seat assembly (10) including a seat cushion (12), opposing upper tracks (18) slidably coupled to respective lower tracks (20), and opposing front links (22) coupling the seat cushion (12) to the respective upper tracks (18), the cushion tipping module (40) comprising:
a motor support bracket (42) configured to be fixedly coupled to the opposing upper tracks (18) of the seat assembly (10);
an electric motor (150) supported by the motor support bracket (42);
a lead screw (148) operatively coupled to the electric motor (150);
a threaded nut (140) having a threaded passageway (142) extending therethrough meshingly engaged with the lead screw (148);
an attachment link (222) having a lower end pivotably coupled to the threaded nut (140);
a transverse tube (124) fixedly coupled to an upper end of the attachment link (222) and rotatable about a longitudinal axis (127) of the transverse tube (124); and
opposing lift links (128) having a proximal end fixedly coupled to the transverse tube (124) and a distal end configured to be pivotably coupled to the respective front links (22) of the seat assembly (10);
wherein the cushion tipping module (40) is configured to selectively tip the seat cushion (12) between an upright seating position and a rearward inclined position after the motor support bracket (42) is fixedly coupled to the opposing upper tracks (18) and the front links (22) are pivotably coupled to the distal end of the respective lift links (128);
**characterized by** opposing side supports (82a, 82b) having a front portion (96) pivotably coupled the distal end of the respective lift links (128);
wherein the opposing side supports (82a, 82b) are configured to be pivotably coupled to the respective front links (22) of the seat assembly (10).

2. The cushion tipping module (40) as set forth in claim **1,** wherein:
when the cushion tipping module (40) is in a lowered position, the electric motor (150) selectively rotates the lead screw (148) in a first rotational direction causing the threaded nut (140) to travel in a forward direction along the lead screw (148) causing the attachment link (222) and the transverse tube (124) to rotate rearward about the longitudinal axis (127) of the transverse tube (124) causing the lift links (128) to rotate upward about the longitudinal axis (127) of the transverse tube (124) until the cushion tipping module (40) is in an inclined position; and
when the cushion tipping module (40) is in the inclined position, the electric motor (150) selectively rotates the lead screw (148) in a second rotational direction causing the threaded nut (140) to travel in a rearward direction along the lead screw (148) causing the attachment link (222) and the transverse tube (124) to rotate forward about the longitudinal axis (127) of the transverse tube (124) causing the lift links (128) to rotate downward about the longitudinal axis (127) of the transverse tube (124) until the cushion tipping module (40) is in the lowered position.

3. The cushion tipping module (40) as set forth in claim 2, further comprising:
opposing front mounts (116) pivotably coupled to respective tube ends of the transverse tube (124);
wherein the front mounts (116) are fixedly coupled to the motor support bracket (42) or are configured to be fixedly coupled to the respective upper tracks (18) of the seat assembly (10).

4. The cushion tipping module (40) as set forth in claim 2, wherein the attachment link (222) further comprises:
a second attachment link (222) pivotably coupled to the threaded nut (140) and fixedly coupled to the transverse tube (124)

5. The cushion tipping module (40) as set forth in claim **1,** further comprising:
a rear bracket (62) configured to be fixedly coupled to the opposing upper tracks (18) of the seat assembly (10); and
opposing rearward links (78) having a bottom portion pivotably coupled to the rear bracket (62) and an upper portion pivotably coupled to a rear portion of the respective side supports (82a, 82b), wherein the rear portion is spaced longitudinally apart from the front portion (96) along the respective side supports (82a, 82b).

6. The cushion tipping module (40) as set forth in claim 4, wherein:
the electric motor (150) is supported above the motor support bracket (42) in an inboard orientation or in an outboard orientation to provide clearance within the seat assembly (10).

7. A cushion frame module (30) configured to be assembled with a seat assembly (10) for use in a vehicle, the seat assembly (10) including a seat cushion (12), opposing upper tracks (18) slidably coupled to respective lower tracks (20), and opposing front and rear links coupling the seat cushion (12) to the respective upper tracks (18), the cushion frame module (30) comprising a cushion tipping module (40) as set forth in any one of claims 1 to 6; and
a legrest module (158) comprising a legrest mechanism (160) fixedly coupled to a mounting bracket (162) configured to be fixedly coupled to the seat cushion (12), wherein the legrest module (158) is configured to selectively extend the legrest mechanism (160) to a deployed position and selectively retract the legrest mechanism (160) to a stowed position after the mounting bracket (162) is fixedly coupled to the seat cushion (12) of the seat assembly (10).

8. The cushion frame module (30) as set forth in claim 7, the legrest mechanism (160) further comprising:
opposing side brackets (166) fixedly coupled to the mounting bracket (162);
opposing linkage mechanisms (168) having an inner end pivotably coupled or fixedly coupled to respective opposing side brackets (166) and having an outer end;
a main platform (164) pivotably coupled or fixedly coupled to the outer end of the opposing linkage mechanisms (168);
a legrest threaded nut (178) having a second threaded passageway extending therethrough and pivotably coupled to the mounting bracket (162);
a legrest lead screw (176) meshingly engaged with the second threaded passageway in the legrest threaded nut (178); and
a primary motor (172) operatively coupled to the legrest lead screw (176) and fixedly coupled to the opposing linkage mechanisms (168), the primary motor (172) configured to selectively rotate the legrest lead screw (176) in a forward rotational direction and a reverse rotational direction to cause the opposing linkage mechanisms (168) to extend and retract, respectively, the main platform (164).

9. The cushion frame module (30) as set forth in claim 8, the mounting bracket (162) further comprising:
opposing attachment brackets (192) fixedly coupled to the respective side brackets (166) of the legrest mechanism (160);
a main brace (190) fixedly coupled to and extending between the opposing attachment brackets (192); and
opposing mounting flanges (194) projecting from the respective attachment brackets (192) and configured to be fixedly coupled to the seat cushion (12) of the seat assembly (10).

10. A seat assembly (10) for use in a vehicle, the seat assembly (10) including:
a seat cushion (12);
opposing upper tracks (18) slidably coupled to respective lower tracks (20);
a cushion frame module (30) as set forth in any one of claims 7 to 9,
the cushion tipping module (40) fixedly coupled to the upper tracks (18);
opposing front links (22) having upper link ends coupled to the seat cushion (12) and lower link ends pivotably coupled to the cushion tipping module (40); wherein
the mounting bracket (162) fixedly coupled to the seat cushion (12) and the legrest mechanism (160) fixedly coupled to the mounting bracket (162).

## Patentansprüche

1. Kissenkippmodul (40), das dazu konfiguriert ist, mit einer Sitzanordnung (10) zur Verwendung in einem Fahrzeug montiert zu werden, wobei die Sitzanordnung (10) ein Sitzkissen (12), gegenüberliegende obere Schienen (18), die verschiebbar mit jeweiligen unteren Schienen (20) gekoppelt sind, und gegenüberliegende vordere Verbindungsglieder (22) aufweist, die das Sitzkissen (12) mit den jeweiligen oberen Schienen (18) koppeln, wobei das Kissenkippmodul (40) aufweist:
eine Motorträgerhalterung (42), die dazu konfiguriert ist, fest mit den gegenüberliegenden oberen Schienen (18) der Sitzanordnung (10) gekoppelt zu sein;
einen Elektromotor (150), der von der Motorträgerhalterung (42) gestützt wird;
eine Leitspindel (148), die betriebsmäßig mit dem Elektromotor (150) gekoppelt ist;
eine Gewindemutter (140) mit einem sich durch sie hindurch erstreckenden Gewindedurchgang (142), der mit der Leitspindel (148) in kämmendem Eingriff steht;
ein Befestigungsglied (222) mit einem unteren Ende, das schwenkbar mit der Gewindemutter (140) gekoppelt ist;
ein Querrohr (124), das fest mit einem oberen Ende des Befestigungsglieds (222) gekoppelt ist und um eine Längsachse (127) des Querrohrs (124) drehbar ist; und
gegenüberliegende Hebeglieder (128) mit einem proximalen Ende, das fest mit dem Querrohr (124) gekoppelt ist, und einem distalen Ende, das dazu konfiguriert ist, schwenkbar mit den jeweiligen vorderen Verbindungsgliedern (22) der Sitzanordnung (10) gekoppelt zu sein;
wobei das Kissenkippmodul (40) dazu konfiguriert ist, das Sitzkissen (12) selektiv zwischen einer aufrechten Sitzposition und einer rückwärts geneigten Position zu kippen, nachdem die Motorträgerhalterung (42) fest mit den gegenüberliegenden oberen Schienen (18) gekoppelt ist und die vorderen Verbindungsglieder (22) schwenkbar mit dem distalen Ende der jeweiligen Hebeglieder (128) gekoppelt sind;
**gekennzeichnet durch**
gegenüberliegende seitliche Träger (82a, 82b), die einen vorderen Abschnitt (96) aufweisen, der schwenkbar mit dem distalen Ende der jeweiligen Hebeglieder (128) gekoppelt ist;
wobei die gegenüberliegenden seitlichen Träger (82a, 82b) dazu konfiguriert sind, schwenkbar mit den jeweiligen vorderen Verbindungsgliedern (22) der Sitzanordnung (10) gekoppelt zu sein.

2. Kissenkippmodul (40) nach Anspruch **1,** wobei:
wenn sich das Kissenkippmodul (40) in einer abgesenkten Position befindet, der Elektromotor (150) selektiv die Leitspindel (148) in einer ersten Drehrichtung dreht, wodurch verursacht wird, dass sich die Gewindemutter (140) in einer Vorwärtsrichtung entlang der Leitspindel (148) bewegt, wodurch verursacht wird, dass sich das Befestigungsglied (222) und das Querrohr (124) rückwärts um die Längsachse (127) des Querrohrs (124) drehen, wodurch verursacht wird, dass sich die Hebeglieder (128) aufwärts um die Längsachse (127) des Querrohrs (124) drehen, bis sich das Kissenkippmodul (40) in einer geneigten Position befindet; und
wenn sich das Kissenkippmodul (40) in der geneigten Position befindet, der Elektromotor (150) selektiv die Leitspindel (148) in einer zweiten Drehrichtung dreht, wodurch verursacht wird, dass sich die Gewindemutter (140) in einer Rückwärtsrichtung entlang der Leitspindel (148) bewegt, wodurch verursacht wird, dass sich das Befestigungsglied (222) und das Querrohr (124) vorwärts um die Längsachse (127) des Querrohrs (124) drehen, wodurch verursacht wird, dass sich die Hebeglieder (128) abwärts um die Längsachse (127) des Querrohrs (124) drehen, bis sich das Kissenkippmodul (40) in der abgesenkten Position befindet.

3. Kissenkippmodul (40) nach Anspruch 2, des Weiteren aufweisend:
gegenüberliegende vordere Halterungen (116), die schwenkbar mit den jeweiligen Rohrenden des Querrohrs (124) gekoppelt sind;
wobei die vorderen Halterungen (116) fest mit der Motorträgerhalterung (42) gekoppelt sind oder dazu konfiguriert sind, fest mit den jeweiligen oberen Schienen (18) der Sitzanordnung (10) gekoppelt zu sein.

4. Kissenkippmodul (40) nach Anspruch 2, wobei das Befestigungsglied (222) des Weiteren aufweist:
ein zweites Befestigungsglied (222), das schwenkbar mit der Gewindemutter (140) und fest mit dem Querrohr (124) gekoppelt ist.

5. Kissenkippmodul (40) nach Anspruch **1,** des Weiteren aufweisend:
eine hintere Halterung (62), die dazu konfiguriert ist, fest mit den gegenüberliegenden oberen Schienen (18) der Sitzanordnung (10) gekoppelt zu sein; und
gegenüberliegende hintere Verbindungsglieder (78), die einen Bodenabschnitt, der schwenkbar mit der hinteren Halterung (62) gekoppelt ist, und einen oberen Abschnitt, der schwenkbar mit einem hinteren Abschnitt der jeweiligen seitlichen Träger (82a, 82b) gekoppelt ist, aufweisen, wobei der hintere Abschnitt in Längsrichtung von dem vorderen Abschnitt (96) entlang der jeweiligen seitlichen Träger (82a, 82b) beabstandet ist.

6. Kissenkippmodul (40) nach Anspruch 4, wobei:
der Elektromotor (150) oberhalb der Motorträgerhalterung (42) in einer Orientierung nach innen oder in einer Orientierung nach außen getragen wird, um einen Freiraum innerhalb der Sitzanordnung (10) bereitzustellen.

7. Kissenrahmenmodul (30), das dazu konfiguriert ist, mit einer Sitzanordnung (10) zur Verwendung in einem Fahrzeug montiert zu werden, wobei die Sitzanordnung (10) ein Sitzkissen (12), gegenüberliegende obere Schienen (18), die verschiebbar mit jeweiligen unteren Schienen (20) gekoppelt sind, und gegenüberliegende vordere und hintere Verbindungsglieder, die das Sitzkissen (12) mit den jeweiligen oberen Schienen (18) koppeln, aufweist, wobei das Kissenrahmenmodul (30) aufweist:
ein Kissenkippmodul (40) nach einem der Ansprüche 1 bis 6; und
ein Beinstützenmodul (158) mit einem Beinstützenmechanismus (160), der fest mit einer Montagehalterung (162) gekoppelt ist, die dazu konfiguriert ist, fest mit dem Sitzkissen (12) gekoppelt zu werden, wobei das Beinstützenmodul (158) dazu konfiguriert ist, den Beinstützenmechanismus (160) selektiv in eine entfaltete Position auszufahren und den Beinstützenmechanismus (160) selektiv in eine verstaute Position einzuziehen, nachdem die Montagehalterung (162) fest mit dem Sitzkissen (12) der Sitzanordnung (10) gekoppelt ist.

8. Kissenrahmenmodul (30) nach Anspruch 7, wobei der Beinstützenmechanismus (160) des Weiteren aufweist:
gegenüberliegende seitliche Halterungen (166), die fest mit der Montagehalterung (162) gekoppelt sind;
gegenüberliegende Verbindungsmechanismen (168) mit einem inneren Ende, das schwenkbar oder fest mit jeweiligen gegenüberliegenden seitlichen Halterungen (166) gekoppelt ist, und mit einem äußeren Ende;
eine Hauptplattform (164), die schwenkbar oder fest mit dem äußeren Ende der gegenüberliegenden Verbindungsmechanismen (168) gekoppelt ist;
eine Beinstütze-Gewindemutter (178), die einen sich durch sie hindurch erstreckenden zweiten Gewindedurchgang aufweist und schwenkbar mit der Montagehalterung (162) gekoppelt ist;
eine Beinstütze-Leitspindel (176), die mit dem zweiten Gewindedurchgang in der Beinstütze-Gewindemutter (178) in kämmendem Eingriff steht; und
einen primären Motor (172), der betriebsmäßig mit der Beinstütze-Leitspindel (176) gekoppelt ist und fest mit den gegenüberliegenden Verbindungsmechanismen (168) gekoppelt ist, wobei der primäre Motor (172) dazu konfiguriert ist, die Beinstütze-Leitspindel (176) selektiv in einer Vorwärtsdrehrichtung und einer Rückwärtsdrehrichtung zu drehen, um zu verursachen, dass die gegenüberliegenden Verbindungsmechanismen (168) die Hauptplattform (164) ausfahren bzw. einziehen.

9. Kissenrahmenmodul (30) nach Anspruch 8, wobei die Montagehalterung (162) des Weiteren aufweist:
gegenüberliegende Befestigungshalterungen (192), die fest mit den jeweiligen seitlichen Halterungen (166) des Beinstützenmechanismus (160) gekoppelt sind;
eine Hauptstrebe (190), die fest mit den gegenüberliegenden Befestigungshalterungen (192) gekoppelt ist und sich zwischen diesen erstreckt; und
gegenüberliegende Montageflansche (194), die von den jeweiligen Befestigungshalterungen (192) vorstehen und dazu konfiguriert sind, fest mit dem Sitzkissen (12) der Sitzanordnung (10) gekoppelt zu werden.

10. Sitzanordnung (10) zur Verwendung in einem Fahrzeug, wobei die Sitzanordnung (10) aufweist:
ein Sitzkissen (12);
gegenüberliegende obere Schienen (18), die verschiebbar mit jeweiligen unteren Schienen (20) gekoppelt sind;
ein Kissenrahmenmodul (30) nach einem der Ansprüche 7 bis 9,
wobei das Kissenkippmodul (40) fest mit den oberen Schienen (18) gekoppelt ist;
gegenüberliegende vordere Verbindungsglieder (22) mit oberen Verbindungsgliedenden, die mit dem Sitzkissen (12) gekoppelt sind, und mit unteren Verbindungsgliedenden, die schwenkbar mit dem Kissenkippmodul (40) gekoppelt sind; wobei
die Montagehalterung (162) fest mit dem Sitzkissen (12) gekoppelt ist und der Beinstützenmechanismus (160) fest mit der Montagehalterung (162) gekoppelt ist.

## Revendications

1. Module de bascule de coussin (40) configuré pour être assemblé avec un assemblage de siège (10) pour une utilisation dans un véhicule, l'assemblage de siège (10) incluant un coussin de siège (12), des glissières supérieures opposées (18) couplées de manière coulissante à des glissières inférieures respectives (20), et des tringles avant opposées (22) couplant le coussin de siège (12) aux glissières supérieures respectives (18), le module de bascule de coussin (40) comprenant :
une platine de support de moteur (42) configurée pour être couplée de manière fixe aux glissières supérieures opposées (18) de l'assemblage de siège (10) ;
un moteur électrique (150) supporté par la platine de support de moteur (42) ; une vis sans fin (148) couplée de manière fonctionnelle au moteur électrique (150) ;
un écrou à pas de vis (140) ayant une voie de passage à pas de vis (142) s'étendant à travers celui-ci, engagé par engrènement avec la vis sans fin (148) ;
une tringle d'attache (222) ayant une extrémité inférieure couplée de manière pivotante à l'écrou à pas de vis (140) ;
un tube transversal (124) couplé de manière fixe à une extrémité supérieure de la tringle d'attache (222) et pouvant être mis en rotation autour d'un axe longitudinal (127) du tube transversal (124) ; et
des tringles de levage opposées (128) ayant une extrémité proximale couplée de manière fixe au tube transversal (124) et une extrémité distale configurée pour être couplé de manière pivotante aux tringles avant respectives (22) de l'assemblage de siège (10) ;
dans lequel le module de bascule de coussin (40) est configuré pour faire basculer sélectivement le coussin de siège (12) entre une position d'assise verticale et une position inclinée vers l'arrière après que la platine de support de moteur (40) est couplée de manière fixe aux glissières supérieures opposées (18) et que les tringles avant (22) sont couplées de manière pivotante à l'extrémité distale des tringles de levage respectives (128) ;
**caractérisé par** des supports latéraux opposés (82a, 82b) ayant une portion avant (96) couplée de manière pivotante à l'extrémité distale des tringles de levage respectives (128) ;
dans lequel les supports latéraux opposés (82a, 82b) sont configurés pour être couplés de manière pivotante aux tringles avant respectives (22) de l'assemblage de siège (10).

2. Module de bascule de coussin (40) selon la revendication 1, dans lequel :
quand le module de bascule de coussin (40) est dans une position abaissée, le moteur électrique (150) met sélectivement en rotation la vis sans fin (148) dans une première direction de rotation, amenant l'écrou à pas de vis (140) à se déplacer dans une direction vers l'avant le long de la vis sans fin (148), amenant la tringle d'attache (222) et le tube transversal (124) à entrer en rotation vers l'arrière autour de l'axe longitudinal (127) du tube transversal (124), amenant les tringles de levage (128) à entrer en rotation vers le haut autour de l'axe longitudinal (127) du tube transversal (124) jusqu'à ce que le module de bascule de coussin (40) soit dans une position inclinée ; et
quand le module de bascule de coussin (40) est dans la position inclinée, le moteur électrique (150) met sélectivement en rotation la vis sans fin (148) dans une seconde direction de rotation, amenant l'écrou à pas de vis (140) à se déplacer dans une direction vers l'arrière le long de la vis sans fin (148), amenant la tringle d'attache (222) et le tube transversal (124) à entrer en rotation vers l'avant autour de l'axe longitudinal (127) du tube transversal (124), amenant les tringles de levage (128) à entrer en rotation vers le bas autour de l'axe longitudinal (127) du tube transversal (124) jusqu'à ce que le module de bascule de coussin (40) soit dans la position abaissée.

3. Module de bascule de coussin (40) selon la revendication 2, comprenant en outre :
des montures avant opposées (116) couplées de manière pivotante à des extrémités de tube respectives du tube transversal (124) ;
dans lequel les montures avant (116) sont couplées de manière fixe à la platine de support de moteur (42) ou sont configurées pour être couplées de manière fixe aux glissières supérieures respectives (18) de l'assemblage de siège (10).

4. Module de bascule de coussin (40) selon la revendication 2, dans lequel la tringle d'attache (222) comprend en outre :
une seconde tringle d'attache (222) couplée de manière pivotante à l'écrou à pas de vis (140) et couplée de manière fixe au tube transversal (124).

5. Module de bascule de coussin (40) selon la revendication 1, comprenant en outre :
une platine arrière (62) configurée pour être couplée de manière fixe aux glissières supérieures opposées (18) de l'assemblage de siège (10) ; et
des tringles arrière opposées (78) ayant une portion de fond couplée de manière pivotante à la platine arrière (62) et une portion supérieure couplée de manière pivotante à une portion arrière des supports latéraux respectifs (82a, 82b), dans lequel la portion arrière est espacée longitudinalement à distance de la portion avant (96) le long des supports latéraux respectifs (82a, 82b).

6. Module de bascule de coussin (40) selon la revendication 4, dans lequel :
le moteur électrique (150) est supporté au-dessus de la platine de support de moteur (42) dans une orientation vers l'intérieur ou dans une orientation vers l'extérieur pour fournir un jeu à l'intérieur de l'assemblage de siège (10).

7. Module de châssis de coussin (30) configuré pour être assemblé avec un assemblage de siège (10) pour une utilisation dans un véhicule, l'assemblage de siège (10) incluant un coussin de siège (12), des glissières supérieures opposées (18) couplées de manière coulissante à des glissières inférieures respectives (20), et des tringles avant et arrière opposées couplant le coussin de siège (12) aux glissières supérieures respectives (18), le module de châssis de coussin (30) comprenant un module de bascule de coussin (40) selon l'une quelconque des revendications 1 à 6 ; et
un module de repose-pieds (158) comprenant un mécanisme de repose-pieds (160) couplé de manière fixe à une platine de montage (162) configurée pour être couplée de manière fixe au coussin de siège (12), le module de repose-pieds (158) étant configuré pour étendre sélectivement le mécanisme de repose-pieds (160) jusque dans une position déployée et pour rétracter sélectivement le mécanisme de repose-pieds (160) jusque dans une position escamotée après que la platine de montage (162) est couplée de manière fixe au coussin de siège (12) de l'assemblage de montage (10).

8. Module de châssis de coussin (30) configuré selon la revendication 7, le mécanisme de repose-pieds (160) comprenant en outre :
des platines latérales opposées (166) couplées de manière fixe à la platine de montage (162) ;
des mécanismes de tringlerie opposés (168) ayant une extrémité intérieure couplée de manière pivotante ou couplée de manière fixe aux platines latérales opposées respectives (166) et ayant une extrémité extérieure ;
une plate-forme principale (164) couplée en rotation ou couplée de manière fixe à l'extrémité extérieure des mécanismes de tringlerie opposés (168) ;
un écrou à pas de vis de repose-pieds (178) ayant une seconde voie de passage à pas de vis s'étendant à travers celui-ci et couplé de manière pivotante à la platine de montage (162) ;
une vis sans fin de repose-pieds (176) engagée par engrènement à la seconde voie de passage à pas de vis dans l'écrou à pas de vis de repose-pieds (178) ; et
un moteur primaire (172) couplé de manière fonctionnelle à la vis sans fin de repose-pieds (176) et couplé de manière fixe aux mécanismes de tringlerie opposés (168), le moteur primaire (172) étant configuré pour mettre sélectivement en rotation la vis sans fin de repose-pieds (176) dans une direction de rotation vers l'avant et dans une direction de rotation inverse pour amener les mécanismes de tringlerie opposés (168) à étendre et à rétracter, respectivement, la plate-forme principale (164).

9. Module de châssis de coussin (30) selon la revendication 8, la platine de montage (162) comprenant en outre :
des platines d'attache opposées (192) couplées de manière fixe aux platines latérales respectives (166) du mécanisme de repose-pieds (160) ;
un renfort principal (190) couplé de manière fixe aux platines d'attache opposées et s'étendant entre celles-ci ; et
des brides de montage opposées (194) se projetant depuis les platines d'attache respectives (192) et configurées pour être couplées de manière fixe au coussin de siège (12) de l'assemblage de siège (10).

10. Assemblage de siège (10) pour une utilisation dans un véhicule, l'assemblage de siège (10) incluant :
un coussin de siège (12) ;
des glissières supérieures opposées (18) couplées de manière coulissante à des glissières inférieures respectives (20) ;
un module de châssis de coussin (30) selon l'une quelconque des revendications 7 à 9 ;
le module de bascule de coussin (40) couplé de manière fixe aux glissières supérieures (18) ;
des tringles avant opposées (22) ayant des extrémités de tringles supérieures couplées au coussin de siège (12) et des extrémités de tringles inférieures couplées de manière pivotante au module de bascule de coussin (40) ; dans lequel
la platine de montage (162) est couplée de manière fixe au coussin de siège (12) et le mécanisme de repose-pieds (160) est couplé de manière fixe à la platine de montage (162).
